# EUROPEAN PATENT APPLICATION

(11) **EP 2 955 676 A2**
(43) Date of publication of application: **16.12.2015**
(21) Application number: 13788331.0
(22) Date of filing: 18.07.2013
(51) Int. Cl.: G06Q 20/16, G06Q 20/40

(54) **TRANSACTION METHOD, AND TRANSACTION SYSTEM AND DEVICE**

(30) Priority: 06.02.2013 CN 201310048157
(71) Applicant: ZTE Corporation, Shenzhen, Guangdong 518057 (CN)
(72) Inventor: HE, Dufeng, Shenzhen Guangdong 518057 (CN); LIANG, Guohe, Shenzhen Guangdong 518057 (CN); FENG, Dejuan, Shenzhen Guangdong 518057 (CN)
(74) Representative: Markfort, Iris-Anne Lucie
(86) International application number: PCT/CN2013/079632
(87) International publication number: WO 2013/167055

(57) **Abstract**

Disclosed are a transaction method, and a transaction system and device. The method comprises: an online store server managing information about physical stores, accepting the login of a user terminal, querying information about physical stores which have corresponding commodities according to a selected commodity list submitted by the user terminal, selecting therefrom a suitable physical store for the user terminal in accordance with a screening policy, and sending the name and position information about the selected physical store to the user terminal; the user terminal reporting the commodity list to a physical store terminal of the physical store selected by the online store server, and the physical store terminal querying position information about a corresponding commodity according to the commodity list reported by the user terminal, and feeding back same to the user terminal; and the user terminal searching for a corresponding commodity in a corresponding physical store according to the position information about the commodity, and completing commodity payment through interaction with the online store server or the physical store terminal. The present invention can carry out querying and selection of mass commodity information, and can greatly improve the shopping experience of a user and ensure shopping quality.

## Description

### TECHNICAL FIELD

The disclosure relates to the field of Internet information technology, and in particular to a transaction method, system, and device.

### BACKGROUND

With development of the Internet and electronics industry, shopping modes are increasingly diversified. There are two usual shopping modes. One is based on Internet virtual shopping, in which a whole process of buying, selling, and commodity transaction may be performed on the Internet, with an inevitable quality or fraud issue, failing to meet a user demand of on-site shopping/experience. The other is shopping at a conventional physical store, in which a commodity may be selected at a physical marketplace and a counter, and transaction by cash or card may be made once a purchase is determined. Although capable of meeting the user demand of on-site experience, such a shopping mode can provide but a small range of commodities for selection, hardly meeting a user demand of free selection and shopping from massive commodities information.

### SUMMARY

In view of this, embodiments herein may provide a transaction method, system, and device, capable of implementing combined virtual online shopping and physical store shopping.

To this end, a technical solution according to an embodiment herein may be implemented as follows.

According to an embodiment herein, a transaction method includes:
managing, by an online mall server, physical store information; receiving login by a user terminal; searching, according to a selected list of commodities submitted by the user terminal, for information on physical stores having a commodity in the list; selecting, according to a selecting strategy, a physical store from the physical stores having a commodity in the list; sending information on a name and a location of the selected physical store to the user terminal;
reporting, by the user terminal, the list of commodities to a physical store terminal of the selected physical store; searching, by the physical store terminal, for information on a location of a commodity corresponding to the list of commodities reported by the user terminal, and feeding the found information on the location of the commodity back to the user terminal;
finding, by the user terminal, the commodity in the physical store according to the received information on the location of the commodity, and paying for the commodity by interacting with the online mall server or the physical store terminal.

The method may further include:
searching, by the physical store terminal, for a tag of the commodity corresponding to the list of commodities reported by the user terminal, and feeding the found tag of the commodity back to the user terminal;
scanning, by the user terminal, the received tag of the commodity, and checking the commodity according to a result of the scanning.

The tag of the commodity may be one of a Near Field Communication NFC tag, a wireless Radio Frequency IDentification RFID tag, and a Quick Response code.

The physical store information may include information on a name of a physical store, a location of the physical store, and a commodity in the physical store.

The physical store information may further include information on a location of the commodity in the physical store.

According to an embodiment herein, a transaction system includes an online mall server, a physical store terminal, and a user terminal.

The online mall server may be configured for: managing physical store information; receiving login by the user terminal; searching, according to a selected list of commodities submitted by the user terminal, for information on physical stores having a commodity in the list; selecting, according to a selecting strategy, a physical store from the physical stores having a commodity in the list; sending information on a name and a location of the selected physical store to the user terminal.

The physical store terminal may be configured for: managing information on a local physical store; reporting the information on the local physical store to the online mall server; searching for information on a location of a commodity in the local physical store according to the list of commodities reported by the user terminal, and feeding the found information on the location of the commodity back to the user terminal.

The user terminal may be configured for: logging in to the online mall server; selecting commodities and submitting the selected list of commodities; receiving the information on the name and the location of the physical store selected by the online mall server for the user terminal; reporting the list of commodities to a physical store terminal of the physical store selected by the online mall server; receiving information on a location of a commodity fed back by the physical store terminal of the selected physical store.

The user terminal may be further configured for: finding the commodity in the selected physical store according to the received information on the location of the commodity, and paying for the commodity by interacting with the online mall server or the physical store terminal of the selected physical store.

The physical store terminal may be further configured for: searching for a tag of the commodity corresponding to the list of commodities reported by the user terminal, and feeding the found tag of the commodity back to the user terminal;

The user terminal may be further configured for: scanning the received tag of the commodity in a physical store, and checking the commodity according to a result of the scanning.

According to an embodiment herein, an online mall server includes a physical store managing module, a first terminal interaction module, and a first physical store interaction module.

The physical store managing module may be configured for: managing physical store information; receiving login by a user terminal; searching, according to a selected list of commodities submitted by the user terminal, for information on physical stores having a commodity in the list; selecting, according to a selecting strategy, a physical store from the physical stores having a commodity in the list; sending, through the first terminal interaction module, information on a name and a location of the selected physical store to the user terminal.

The first terminal interaction module may be configured for: delivering information between the online mall server and the user terminal.

The first physical store interaction module may be configured for: delivering information between the online mall server and a physical store terminal.

The information delivered between the online mall server and the user terminal may include: information delivered during login of the user terminal, the selected list of commodities submitted by the user terminal received by the online mall server, and information delivered during commodity payment between the online mall server and the user terminal.

The information delivered between the online mall server and the physical store terminal may include physical store information reported by the physical store terminal received by the online mall server.

According to an embodiment herein, a physical store terminal includes a commodity managing module, a second terminal interaction module, and a first network interaction module.

The commodity managing module may be configured for: managing information on a local physical store; searching for information on a location of a commodity corresponding to a list of commodities reported by a user terminal.

The second terminal interaction module may be configured for: receiving the list of commodities reported by the user terminal, and feeding the found information on the location of the commodity back to the user terminal.

The first network interaction module may be configured for: reporting the information on the local physical store to an online mall server.

The second terminal interaction module may be further configured for interacting with the user terminal to complete commodity payment.

According to an embodiment herein, a user terminal include a shopping module, a second network interaction module, an information storing module, a second physical store interaction module, and a paying module.

The shopping module may be configured for: logging in, through the second network interaction module, to an online mall server, selecting commodities and submitting a selected list of commodities.

The second network interaction module may be configured for delivering information between the user terminal and the online mall server.

The information storing module may be configured for: receiving and storing information on a name and a location of a physical store selected by the online mall server for the user terminal.

The second physical store interaction module may be configured for: reporting the list of commodities to a physical store terminal of the physical store selected by the online mall server, and receiving information on a location of a commodity fed back by the physical store terminal of the selected physical store.

The paying module may be configured for: paying for the commodity by interacting with the online mall server or the physical store terminal.

With a transaction method, system, and device according to an embodiment herein, online and offline resources of a virtual online mall and a physical store or an experience store can be combined, implementing search and selection among massive commodity information; complementary advantages of virtual online shopping and of physical store shopping can be combined, greatly increasing user experience in shopping, ensuring shopping quality..

### BRIEF DESCRIPTION OF THE DRAWINGS

Fig.1 is a diagram of a structure of a transaction system according to an embodiment herein.
Fig.2 is a diagram of internal structures of an online mall server, a physical store terminal, and a user terminal according to an embodiment herein.
Fig.3 is a flowchart of a transaction method according to an embodiment herein.

### DETAILED DESCRIPTION

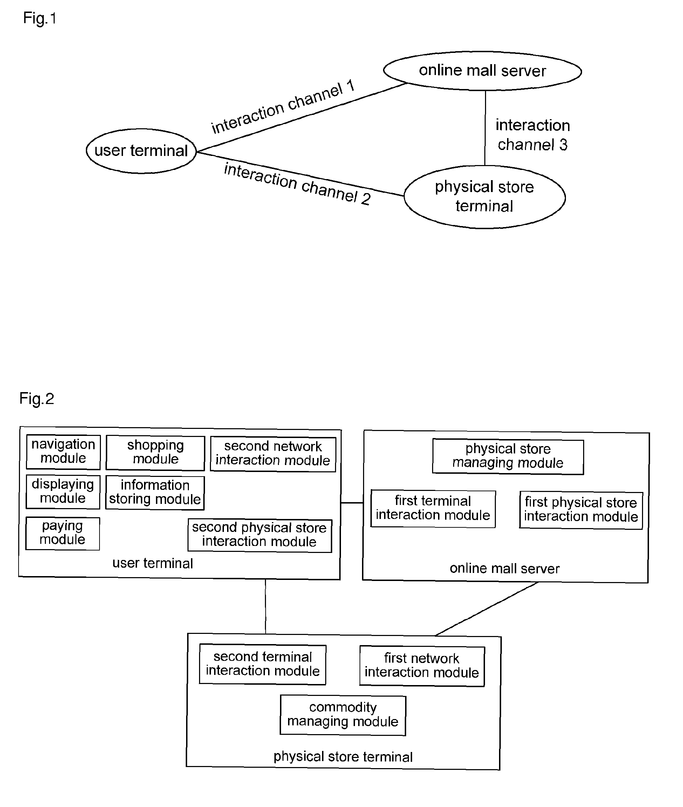

A technical solution herein is elaborated below with reference to drawings and embodiments.
a transaction system according to an embodiment herein, as shown in Fig.1, mainly may include an online mall server, a physical store terminal, and a user terminal, among which information may be delivered through interaction channels.

An online mall may include various virtual stores implementing Business To Business (B2B), Business To Customer (B2C), Customer to Customer (C2C), Online To Offline (020) buying and selling, and the like.

Compared with a virtual store, a physical store may be a conventional marketplace, a shopping center, a storefront, or a new experience store established by a virtual store. There may be multiple physical stores, each physical store may include a physical store terminal. The physical store terminal may be configured for maintaining information on the local physical store (the physical store where the physical store terminal is arranged).

A user terminal may be a personal device for user shopping, and may be a mobile terminal, a PC, a laptop, and the like, or a combination thereof.

An interaction channel may be configured for completing system information delivery. A physical bearer of an interaction channel may be a network of any type and /or form. Such a bearer network may include any of a point to point network, a broadcast network, a wide area network, a local area network, a remote communication network, a data communication network, a computer network, an Asynchronous Transfer Mode (ATM) network, a Synchronous Optical Network (SONET), a Synchronous Digital Hierarchy (SDH) network, a wireless network, and a wired network.

An interaction channel 1 may be that between a user terminal and an online mall server, for which a cellular wireless network may be selected as a bearer. Through the interaction channel, a terminal user may log in to an online mall, browse and select a list of commodities as needed. The online mall server may acquire, according to the list of commodities, stored information on commodities in physical stores; look for a proper physical store for the user according to a strategy, and transfer information on the name and location of the physical store and the like to the user terminal through the interaction channel.

An interaction channel 2 may be that between a user terminal and a physical store terminal, for which a WIFI network may be selected as a bearer. After arriving at the physical store, the user may acquire, through the interaction channel, a specific location of a commodity corresponding to the list of commodities in the physical store, such that the user may select or experience the commodity. The physical store terminal may also transfer other relevant information, such as broadcast information, to the user terminal through the interaction channel.

An interaction channel 3 may be that between an online mall server and a physical store terminal, for which a wired network may be selected as a bearer. Through the interaction channel, physical store information may be transferred to the online mall server. The physical store information may include information on the name of a physical store, the location of the physical store, a commodity in the physical store, and the like. The physical store information may further include information on the location of a commodity (in the physical store, such as a floor, a shelf), and the like. The online mall server may also initiate a requirement to a physical store terminal to report information dynamically as needed.

In the transaction system, the online mall server may be configured for: managing physical store information; receiving login by the user terminal; searching, according to a selected list of commodities submitted by the user terminal, for information on physical stores having a commodity in the list; selecting, according to a selecting strategy, a physical store from the physical stores having a commodity in the list; sending information on a name and a location of the selected physical store to the user terminal.

The physical store terminal may be configured for: managing information on a local physical store; reporting the information on the local physical store to the online mall server; searching for information on a location of a commodity in the local physical store according to the list of commodities reported by the user terminal, and feeding the found information on the location of the commodity back to the user terminal.

The user terminal may be configured for: logging in to the online mall server; selecting commodities and submitting the selected list of commodities; receiving the information on the name and the location of the physical store selected by the online mall server for the user terminal; reporting the list of commodities to a physical store terminal of the physical store selected by the online mall server; receiving information on a location of a commodity fed back by the physical store terminal of the selected physical store.

The user terminal may be further configured for: finding the commodity in the selected physical store according to the received information on the location of the commodity, and paying for the commodity by interacting with the online mall server or the physical store terminal of the selected physical store.

The physical store terminal may be further configured for: searching for a tag of the commodity corresponding to the list of commodities reported by the user terminal, and feeding the found tag of the commodity back to the user terminal.

The user terminal may be further configured for: scanning the received tag of the commodity in a physical store, and checking the commodity according to a result of the scanning. A tag of a commodity may be one of a Near Field Communication (NFC) tag, a wireless Radio Frequency IDentification (RFID) tag , and a Quick Response code.

With the system, while being logged in to an online mall, a terminal user may browse commodities to be purchased, select and then submit a list of commodities; an online mall server may acquire stored physical store information according to the list of commodities, select a physical store according to a strategy, and transfer information on the name and the location of the selected physical store to the user terminal. After arriving at the physical store, the user may acquire information on the specific location of the commodities in the physical store, select or experience a commodity; network payment may be made through the online mall or on-site payment may be made directly at the physical store for a subsequent purchase, thereby greatly increasing means and experience of shopping.

Fig.2 shows a diagram of internal structures of an online mall server, a physical store terminal, and a user terminal in a transaction system according to an embodiment herein.

The online mall server may include a physical store managing module, a first terminal interaction module, and a first physical store interaction module.

The physical store managing module may be configured for: managing physical store information; receiving login by a user terminal; searching, according to a selected list of commodities submitted by the user terminal, for information on physical stores having a commodity in the list; selecting, according to a selecting strategy, a physical store from the physical stores having a commodity in the list; sending, through the first terminal interaction module, information on a name and a location of the selected physical store to the user terminal.

The first terminal interaction module may be configured for: delivering information between the online mall server and the user terminal. The information delivered between the online mall server and the user terminal may include at least: information delivered during login of the user terminal, the selected list of commodities submitted by the user terminal received by the online mall server, and information delivered during commodity payment between the online mall server and the user terminal.

The first physical store interaction module may be configured for: delivering information between the online mall server and a physical store terminal. The information delivered between the online mall server and the physical store terminal may include at least physical store information reported by the physical store terminal received by the online mall server.

To increase processing efficiency, the physical store managing module may manage the physical store information by way of a database.

The physical store terminal may include a commodity managing module, a second terminal interaction module, and a first network interaction module.

The commodity managing module may be configured for: managing information on a local physical store; searching for information on a location of a commodity corresponding to a list of commodities reported by a user terminal.

The second terminal interaction module may be configured for: receiving the list of commodities reported by the user terminal, and feeding the found information on the location of the commodity back to the user terminal.

The first network interaction module may be configured for: reporting the information on the local physical store to an online mall server.

The second terminal interaction module may be further configured for interacting with the user terminal to complete commodity payment.

The user terminal may include a shopping module, a second network interaction module, an information storing module, a second physical store interaction module, and a paying module.

The shopping module may be configured for: logging in, through the second network interaction module, to an online mall server, selecting commodities and submitting a selected list of commodities.

The second network interaction module may be configured for delivering information between the user terminal and the online mall server.

The information storing module may be configured for: receiving and storing information on a name and a location of a physical store selected by the online mall server for the user terminal.

The second physical store interaction module may be configured for: reporting the list of commodities to a physical store terminal of the physical store selected by the online mall server, and receiving information on a location of a commodity fed back by the physical store terminal of the selected physical store.

The paying module may be configured for: paying for the commodity by interacting with the online mall server or the physical store terminal.

The user terminal may further include a displaying module configured for information display and user interface interaction during shopping and paying.

The user terminal may further include a navigation module configured for performing Global Positioning System (GPS) navigation according to information on the location of a commodity fed back by a physical store terminal as well as information on the location of the user terminal.

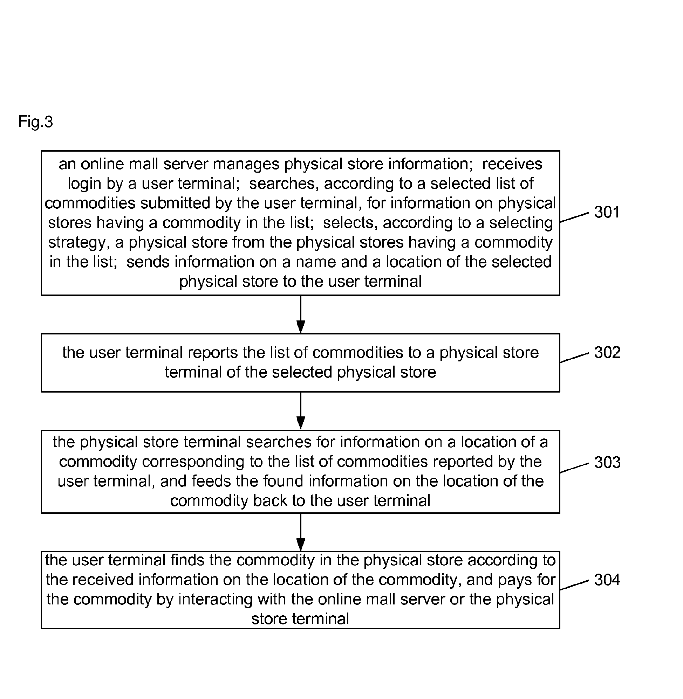

A transaction method implemented by a transaction system according to an embodiment herein, as shown in Fig.3, mainly may include steps as follows.

In step 301, an online mall server manages physical store information; receives login by a user terminal; searches, according to a selected list of commodities submitted by the user terminal, for information on physical stores having a commodity in the list; selects, according to a selecting strategy, a physical store from the physical stores having a commodity in the list; sends information on a name and a location of the selected physical store to the user terminal.

In step 302, the user terminal reports the list of commodities to a physical store terminal of the selected physical store.

In step 303, the physical store terminal searches for information on a location of a commodity corresponding to the list of commodities reported by the user terminal, and feeds the found information on the location of the commodity back to the user terminal.

In step 304, the user terminal finds the commodity in the physical store according to the received information on the location of the commodity, and pays for the commodity by interacting with the online mall server or the physical store terminal.

The transaction method may further include steps as follows.

The physical store terminal may search for a tag of the commodity corresponding to the list of commodities reported by the user terminal, and feed the found tag of the commodity back to the user terminal.

The user terminal may scan the received tag of the commodity, and check the commodity according to a result of the scanning.

A tag of a commodity may be one of an NFC tag, an RFID tag, and a Quick Response code.

The physical store information may include information on a name of a physical store, a location of the physical store, and a commodity in the physical store. The physical store information may further include information on a location of the commodity in the physical store.

The transaction method is further elaborated below with reference to an embodiment. In the embodiment, a terminal user plans to buy 3 commodities A, B, C in an online mall and wishes to experience the commodities and make payment at a nearby physical store. The user terminal supports GPS navigation, WIFI, and NFC. A physical store terminal regularly reports commodities relevant information to the online mall server. For precise management, each commodity may be provided with an NFC tag for user search and check. The transaction method mainly may include steps as follows.

In step a, a terminal user may select a commodity in an online mall and form a selected list of commodities.

In step b, a selecting strategy may include that based on nearby experience and that based on experience once for all; the terminal user may select nearby experience, and input a current geographical location of the terminal user.

In step c, an online mall server may traverse all physical stores having the commodity A, B, or C in the selected list of commodities, select a physical store M according to a nearby principle, transfer the address of the physical store M to the user terminal. Of course, the online mall server may select multiple physical stores for the user, and it's up to the user to select the physical store(s) where to shop.

In step d, the user terminal may start a GPS navigation system and arrive at the physical store M.

In step e, the user terminal may transfer the list of commodities to a terminal of the physical store M through WIFI in the physical store M. The list of commodities may include information on A, B, C. The list of commodities may of course include information on only one or at least one commodity the user desires to experience or purchase.

In step f, the terminal of the physical store M may find information on the location of a commodity in the local physical store according to the received list of commodities, return the found information as well as an NFC tag thereof to the user terminal.

In step g, the terminal user may find the commodity according to the received information on the location of the commodity.

In step h, the user terminal may check the commodity by reading the NFC tag of the commodity.

In step i, the terminal user may determine to purchase the commodity and form a payment list.

In step j, NFC payment may be made in the physical store M using the user terminal.

In step k, the user may pick up the commodity at the physical store M, completing the whole transaction.

To sum up, with embodiments herein, online and offline resources of a virtual online mall and a physical store or an experience store can be combined, implementing search and selection among massive commodity information; complementary advantages of virtual online shopping and of physical store shopping can be combined, greatly increasing user experience in shopping, ensuring shopping quality.

What described are merely embodiments of the present disclosure and are not intended to limit the protection scope of the present disclosure.

## Claims

1. A transaction method, comprising:
managing, by an online mall server, physical store information; receiving login by a user terminal; searching, according to a selected list of commodities submitted by the user terminal, for information on physical stores having a commodity in the list; selecting, according to a selecting strategy, a physical store from the physical stores having a commodity in the list; sending information on a name and a location of the selected physical store to the user terminal;
reporting, by the user terminal, the list of commodities to a physical store terminal of the selected physical store; searching, by the physical store terminal, for information on a location of a commodity corresponding to the list of commodities reported by the user terminal, and feeding the found information on the location of the commodity back to the user terminal;
finding, by the user terminal, the commodity in the physical store according to the received information on the location of the commodity, and paying for the commodity by interacting with the online mall server or the physical store terminal.

2. The method according to claim 1, further comprising:
searching, by the physical store terminal, for a tag of the commodity corresponding to the list of commodities reported by the user terminal, and feeding the found tag of the commodity back to the user terminal;
scanning, by the user terminal, the received tag of the commodity, and checking the commodity according to a result of the scanning.

3. The method according to claim 2, wherein the tag of the commodity is one of a Near Field Communication NFC tag, a wireless Radio Frequency IDentification RFID tag, and a Quick Response code.

4. The method according to claim 1, 2, or 3, wherein the physical store information comprises information on a name of a physical store, a location of the physical store, and a commodity in the physical store.

5. The method according to claim 4, wherein the physical store information further comprises information on a location of the commodity in the physical store.

6. A transaction system, comprising an online mall server, a physical store terminal, and a user terminal, wherein
the online mall server is configured for: managing physical store information; receiving login by the user terminal; searching, according to a selected list of commodities submitted by the user terminal, for information on physical stores having a commodity in the list; selecting, according to a selecting strategy, a physical store from the physical stores having a commodity in the list; sending information on a name and a location of the selected physical store to the user terminal;
the physical store terminal is configured for: managing information on a local physical store; reporting the information on the local physical store to the online mall server; searching for information on a location of a commodity in the local physical store according to the list of commodities reported by the user terminal, and feeding the found information on the location of the commodity back to the user terminal;
the user terminal is configured for: logging in to the online mall server; selecting commodities and submitting the selected list of commodities; receiving the information on the name and the location of the physical store selected by the online mall server for the user terminal; reporting the list of commodities to a physical store terminal of the physical store selected by the online mall server; receiving information on a location of a commodity fed back by the physical store terminal of the selected physical store;
the user terminal is further configured for: finding the commodity in the selected physical store according to the received information on the location of the commodity, and paying for the commodity by interacting with the online mall server or the physical store terminal of the selected physical store.

7. The system according to claim 6, wherein the physical store terminal is further configured for: searching for a tag of the commodity corresponding to the list of commodities reported by the user terminal, and feeding the found tag of the commodity back to the user terminal;
the user terminal is further configured for: scanning the received tag of the commodity in a physical store, and checking the commodity according to a result of the scanning.

8. An online mall server, comprising a physical store managing module, a first terminal interaction module, and a first physical store interaction module, wherein
the physical store managing module is configured for: managing physical store information; receiving login by a user terminal; searching, according to a selected list of commodities submitted by the user terminal, for information on physical stores having a commodity in the list; selecting, according to a selecting strategy, a physical store from the physical stores having a commodity in the list; sending, through the first terminal interaction module, information on a name and a location of the selected physical store to the user terminal;
the first terminal interaction module is configured for: delivering information between the online mall server and the user terminal;
the first physical store interaction module is configured for: delivering information between the online mall server and a physical store terminal.

9. The online mall server according to claim 8, wherein the information delivered between the online mall server and the user terminal comprises: information delivered during login of the user terminal, the selected list of commodities submitted by the user terminal received by the online mall server, and information delivered during commodity payment between the online mall server and the user terminal.

10. The online mall server according to claim 8, wherein the information delivered between the online mall server and the physical store terminal comprises physical store information reported by the physical store terminal received by the online mall server.

11. A physical store terminal, comprising a commodity managing module, a second terminal interaction module, and a first network interaction module, wherein
the commodity managing module is configured for: managing information on a local physical store; searching for information on a location of a commodity corresponding to a list of commodities reported by a user terminal;
the second terminal interaction module is configured for: receiving the list of commodities reported by the user terminal, and feeding the found information on the location of the commodity back to the user terminal;
the first network interaction module is configured for: reporting the information on the local physical store to an online mall server.

12. The physical store terminal according to claim 11, wherein the second terminal interaction module is further configured for interacting with the user terminal to complete commodity payment.

13. A user terminal, comprising a shopping module, a second network interaction module, an information storing module, a second physical store interaction module, and a paying module, wherein
the shopping module is configured for: logging in, through the second network interaction module, to an online mall server, selecting commodities and submitting a selected list of commodities;
the second network interaction module is configured for delivering information between the user terminal and the online mall server;
the information storing module is configured for: receiving and storing information on a name and a location of a physical store selected by the online mall server for the user terminal;
the second physical store interaction module is configured for: reporting the list of commodities to a physical store terminal of the physical store selected by the online mall server, and receiving information on a location of a commodity fed back by the physical store terminal of the selected physical store;
the paying module is configured for: paying for the commodity by interacting with the online mall server or the physical store terminal.
